# EUROPEAN PATENT SPECIFICATION

(11) **EP 4 612 238 B1**
(45) Date of publication and mention of the grant of the patent: **16.09.2026**
(21) Application number: 23828691.8
(22) Date of filing: 06.12.2023
(51) Int. Cl.: C08L 83/06, C08L 83/10, C08L 83/14

(54) **ADHESIVE AND/OR RESIN FORMULATION, SHAPED ARTICLE COMPRISING SAME, AND USE**
KLEBSTOFF- UND/ODER HARZFORMULIERUNG, FORMKÖRPER DAMIT UND VERWENDUNG
FORMULATION POUR RÉSINE ET/OU ADHÉSIF, CORPS MOULÉ ET UTILISATION CORRESPONDANTS

(30) Priority: 08.12.2022 EP 22212236
(43) Date of publication of application: 10.09.2025
(73) Proprietor: Siemens Aktiengesellschaft, 80333 München (DE)
(72) Inventor: EDER, Florian, 91054 Erlangen (DE); PIHALE, Sven, 91792 Stopfenheim (DE)
(74) Representative: Siemens Patent Attorneys
(86) International application number: PCT/EP2023/084518
(87) International publication number: WO 2024/121229

(56) References cited:
- EP-A1- 4 059 712
- CN-A- 115 246 939
- DE-A1- 102021 201 697
- US-A1- 2020 305 269

## Description

The invention relates to a formulation for a resin and/or an adhesive, more particularly a thermally conductive resin and/or adhesive, to a shaped article comprising said formulation, and to use in an electrical or electronic component for heat dissipation.

A concern within power electronics and electronics more generally is to boost the power densities. This is always accompanied by increased generation of heat in the components and, respectively, heat dissipation from the components.

Attempts are therefore made to boost the cooling capacity of the elements of the components. For instance, using thermally conductive adhesives and casting resins, heat given off by the electrical components in operation is dissipated. The adhesives are used within the boards and their infrastructure in the device to join individual components, while casting resins are employed for encapsulation and sealing of the sensitive electronics with respect to the surrounding environment.

Known for this purpose from EP 4059712 is a hybrid composition of materials for printing by means of 3D printing. This composition of materials is used as a starting material in additive manufacturing processes for the radiation-induced production of a shaped article, such as a cooling body mounted on the electronic power element.

The complex composition of materials known from the aforesaid EP 4059712 comprises alkoxidic components, siloxanes and, to initiate the UV curing, an organic-based photopolymer, and also a reactive diluent.

A disadvantage of the existing materials suitable for use in additive manufacturing processes is that after these materials have cured, as part of the process referred to as "solidification", for example, they often are brittle, readily delaminate and/or readily break. This is the case especially when these materials contain fillers, having been rendered thermally conductive by filling with thermally conductive particles, for example. A reason for this is that the particles in general are not subject to any solidification shrinkage, being instead present already in their final form. For this reason, the entire shrinkage-related tension ought to be accommodated by the surrounding network, hence imposing massive challenges on the material, especially in the case of high filling levels.

It has been determined that the UV initiation in the case of the composition of materials according to the abovementioned EP 4059712 has the principal effect of rapid precrossing of the organic components in the composition, which hinders free crosslinking of the remaining components and so generates stresses in the resultant shaped article.

Also disadvantageous in the case of the known composition of materials is a filling with metallic particles when this originally liquid composition of materials cures through UV crosslinking to form a solid shaped article. This is the case in particular because the use of metals as filler material prevents equally good crosslinking within the composition of materials through uniform exposure of the material to light. Here again, stresses in the resultant solid shaped article are the consequence.

An object of the present invention, therefore, is to provide an adhesive and/or resin which can be employed for heat removal in electronics, more particularly in power electronics, which has mechanical strength improved relative to the prior art and whose possible filler materials include metals as well, for example.

This object is achieved by the subject matter of the present invention as it is disclosed in the description and the claims.

Subject matter of the present invention accordingly is a formulation for a resin and/or an adhesive, comprising at least one first material composed of at least one organofunctional silane component with a ceramic-forming alkoxidic component, and at least one second, liquid-form material, resin curable thermally to a shaped article, and reactive diluents.

While reactive diluents are indeed known for the establishment of rheology in the case of thermosetting coating materials, it has surprisingly been determined here that reactive diluents, even when organofunctional silane compounds - i.e., the silane-based materials in question here - are being used, lower the viscosity of the uncrosslinked composition of materials, but scavenge solvent released during and after curing, rendering said solvent evaporable and/or copolymerizing it. Suitability for these purposes is possessed only by very specific reactive diluents from the class of compounds of the ketones and/or of the acrylates, i.e., compounds which comprise the structural unit H₂C=C(**R**) -C (**R**) = O. R here may be identical or nonidentical and may be any desired monovalent organic radical, such as for example an aryl or an alkyl group or a heteroaryl or a heteroalkylaryl group.

The term "removable by evaporation" means presently if an extraction method leads to the partial or complete removal of unwanted solvents and/or reaction byproducts from a liquid reaction mixture, which may also comprise a dispersion of solids, in the form of filler particles, for example. One extraction method is, for example, the classic rotary evaporation, optionally with reduced pressure and heating. Besides this method, which is also referred to as "rotovapping", it is also possible to use chemical and/or physical sorption methods to reduce the solvent content.

A general recognition of the invention is that removal of an unwanted solvent and/or byproduct - such as an alcohol, i.e., butanol and/or methanol, for example - from a liquid reaction mixture is possible without there being disadvantages, such as increase in viscosity and/or deterioration in storage stability, if the solvent is replaced by a suitable other material. This substitute material in particular is miscible with the existing system of materials and/or is capable chemically of entering into a chemical reaction with the existing material that results in incorporation into the chemical network of the shaped article being produced.

In this context it has been found that high-viscidity - i.e., viscous to highly viscous - reactive diluents are suitable substitutes. They act prior to the polymerization as solvents, and after crosslinking has taken place they are no longer able to escape from the solid. While reactive diluents are indeed already prior art in the production of resins and polymeric casting compounds, their use in the field of silicate chemistry, particularly in a sol-gel process, was hitherto unknown.

The use of a reactive diluent in accordance with the invention, preferably of a long-chain reactive diluent, makes it possible not only to reduce significantly the shrinkage and hence improve the dimensional integrity, from about 10 vol% to less than 5 vol%, for example, but also to exert influence on the elastic and rheological properties of the hybrid composition of materials. On solidification, therefore, the stress states, which still form to a small extent, can be accommodated and dispersed more effectively in the shaped article, thermal shock states are able to proceed without the development of cracks, and/or, in particular, even relatively high filling levels with thermal conductivity-boosting particles can be brought about, by comparison with formulations not mixed with reactive diluents - or mixed only with short-chain reactive diluents. Higher filling levels with thermally conductive fillers lead overall to higher thermal conductivities. Since a number of reactive diluents with different chain lengths are suitable for use in the hybrid composition of materials described, viscosity and elasticity may be adjusted not only via the amount of the reactive diluent but also via the type used, as well. The use of mixtures of the reactive diluents is likewise possible.

The addition of the reactive diluent and the removal of the organic reaction products by rotary evaporation are accomplished preferably after the addition of the water for hydrolysis in the last synthesis step.

The "first material" presently denotes a composition of materials that comprises at least two components, with one component being or at least primarily comprising an organofunctional silane compound, the starting molecule of this component comprising, with particular preference, not only alkoxides but also organofunctional radicals.

The organofunctional silane compound has an empirical formula (R')₁₊ₓ - Si - (OCR_{2/3})₃₋ₓ, where x can be 0, 1, 2 or 3, with
R' = hydrocarbon and derivatives for hydrocarbon, i.e., alkyl, aryl, -(-CH₂)_{y}-NH₂, -(-CH₂)_{y}-PH₂,
   and
R = hydrocarbon and derivates for hydrocarbon, i.e., alkyl, aryl, -(-CH₂)_{y}-NH₂, -(-CH₂)_{y}-PH₂, and also heteroatoms such as oxygen "-O", nitrogen "-N", sulfur "-S", phosphorus "-P" with corresponding organic radicals.

According to one advantageous embodiment, bifunctional silanes, i.e., silanes of the above-described empirical formula with x = 1, are preferred. This is the case in particular since it has been found that the introduction of - for example - dialkoxysilanes into the network increases the flexibility of the inorganic network. The reason is that these silanes possess only two reactive functionalities, whereas the other organofunctional silanes in general possess four or three functionalities. As a result, the degree of crosslinking of the overall system is artificially reduced and hence the flexibility is increased. It has additionally been found that through the introduction of organic reactive diluents, the mechanical properties in terms of shrinkage and cracking of a shaped body produced therefrom by curing are adapted.

It should be borne in mind, however, that the organic components should not be added in infinite amounts, since otherwise the thermal conductivity goes down.

In the synthesis of materials, the organic radicals are fully retained and react only during processing. The alkoxide groups can react in the presence of water, with elimination of alcohol, more particularly various alcohols, such as methanol, ethanol, propanol, etc., to form silanol groups (-OH). During unwanted aging of the material, but more particularly during the thermal postcrosslinking with elimination of water, these groups in turn form the "glass component" or else silane component "Si-O-Si".

The molar weight of these organofunctional silane compounds is generally in the range from 100 g/mol to 400 g/mol, more particularly from 150 g/mol to 300 g/mol, very particularly from 200 g/mol to 250 g/mol.

The second compound of the composition of materials in question here, which is referred to as "first material", is a ceramic-forming component, a compound present more particularly in complex form and comprising at least one silicon, aluminum, zirconium and/or titanium element, this compound comprising at least one alkoxidic ligand. In principle this component contains no fractions or only small fractions of organofunctional groups and preferably has only alkoxidic ligands.

Through a condensation reaction, in a sol-gel process, for example, first and second components are reacted with one another, to form the "first material", which exhibits an oxidic bridge between two central atoms, for example, between one of the following atoms: silicon, aluminum, zirconium and/or titanium and/or else two or more with one another in any desired combinations and mixtures.

This "first material" is an "organofunctional silane" which has been consumed at least partly by reaction, with condensation, with at least one "ceramic-forming alkoxidic component". This "first material" is also referred to below as "partially reacted silane mixture".

In the first material thus formed, the ratio of the organofunctional silane compound to the ceramic-forming component is preferably in the range from 99 mol%:1 mol% to 30 mol%:70 mol%, with the fraction of organofunctional silane compound preferably predominating in molar terms in the first material.

For the "ceramic-forming component" of the first material, compounds such as "waterglass" are suitable. It is known that these compounds are able to constitute stable compounds with suitable organic ligands, such as acrylate, alkyl acrylate, epoxide, styrene and/or anhydride ligands, under standard conditions. In the ceramic-forming component there may be any desired combinations of zirconium-, silicon-, titanium- and/or aluminum-oxygen bonds, and/or phosphorus bonds with organic ligands. The ligands may comprise bridging or nonbridging ligands.

The compounds in question are compounds which comprise, for example, silicon-, zirconium- and/or aluminum-oxygen bonds such as -Si-O-Si-, -Al-O-Al-, Si-O-Al-, -Zr-O-Zr-, -Si-O-Zr--Zr-O-Al-O-Si-, -Si-O-Al-O-Zr-, and also any desired further combinations thereof.

The "ligand" here denotes an atom or a molecule which coordinates to a metal atom via what is called "dative" bonding. This dative bonding is generally by way of a free electron pair in the valence shell of at least one atom of the ligand to the central metal atom.

"Waterglass" refers for example to a compound such as

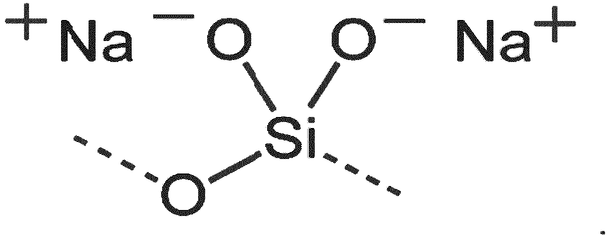

In the production of the "first material", the reactive diluent is initially not added, because acrylate-based reactive diluents, as are preferably employed here, are fairly rapidly consumed by reaction on mixing with organofunctional silane. Hence an acrylate network is developed prior to the development of the hybrid polymer network that is the first material. In particular, the condensation reaction of the organofunctional silanes is slower than the formation of the acrylate network. Accordingly, if the reactive diluent were mixed straightaway with the organofunctional silanes, an acrylate network would be formed that would leave less space for an advantageous arrangement to the rest of the reaction partners in the subsequent reaction. This can lead to a lack of local saturation of functionalities in the material and to degrees of crosslinking being too high at other places. At molecular levels, therefore, the material becomes inhomogeneous and loses properties. This may denote reduced strength and high brittleness, and also reduced thermal properties if it interrupts conduction paths in the material.

In the text below, the invention is elucidated in more detail by means of an exemplary embodiment:
One mole of aluminum sec-butoxide (ASB) was introduced. It was cooled using an ice bath to around 10°C. First of all, in order to prevent a precipitation reaction, the ASB was protected by formation of a chelate complex with ethyl acetoacetate (EAA) in a molar ratio of 1:1 to the ASB.

Since formation of a complex is exothermic, the temperature was monitored during the addition and was not to exceed 13°C. After half an hour of stirring, 2 mol each of the silanes 3-trimethoxysilylmethyl methacrylate (MAMTMS) and 3-glycidyloxypropyltrimethoxysilane (GPTMS) were added, the addition being made dropwise over the course of 5 minutes. An hour after addition of the silanes, the controlled hydrolysis reaction took place through dropwise addition of 15 mol of water. After twelve hours of stirring, the reaction of the hybrid material is at an end, and further processing with reactive diluent and rotary evaporation is performed.

For the hydrolysis reaction above, therefore, each mole of silicon precursors and aluminum precursors produces three moles of methanol and three moles of 2-butanol. Based on the possible condensation products of the silanes used, the formula below is used to calculate the amount of reactive diluent required. Added for example is a mass fraction of 20 wt%, based on the later total mass of the resultant hybrid material prior to the rotary evaporation. $m \left(reactive dil.\right) = \frac{wt % \left(reactive dil. in overall system\right) ⋅ {m}_{theoretical} \left(hybrid mat. after rot. evaporation\right)}{wt % \left(hybrid mat. in overall system\right)}$

In the example above, therefore, **100 g** of starting materials produce
**around 24.6 g of methanol and around 14.2 g of**
**butanol = Σ 38.8 g**
38.8 g of alcohol which cannot be incorporated by crosslinking into the shaped article and hence may ultimately lead to shrinkages.

This leaves = > **61.2 g** of theoretical mass of the hybrid composition of materials without reactive diluent.

The total of **38.8 g** is the theoretical amount of solvent which ought theoretically to be removed, by rotary evaporation, for example.

**20 wt%** of reactive diluent are then added, for example, corresponding to an amount of **15.3 g.**

The hybrid composition of materials, comprising at least the ceramic-forming substance, the silane and the reactive diluent, e.g., urethane dimethacrylate (UDMA), ethylene glycol dimethacrylate (EGDMA), 1,6-hexanediol diacrylate (HDODA), bisphenol A ethoxydiacrylate (BAEDA), trimethylpropane triacrylate (TMPTA) etc., is weighed out into a 500 ml round-bottom flask in order to remove the alcohol. The round-bottom flask is then connected to a rotary evaporator and set to <30°C in a waterbath, with the pressure p being slowly lowered to less than 100 mbar. This reduced pressure is held for a few minutes, with the flask being rotated at a speed of around 200 rpm and thereafter flooded with air again.

This produced a material, based on a silane mixture, which comprises both [R₂Si-O-Si-] and [R₂Si-O-Al-O-] units.

The reaction here is implemented for example as a sol-gel reaction, which comprises a condensation.

This illustrative reaction according to one embodiment of the invention for forming one of the possible "partially reacted silane mixtures" or, respectively, the first material, which in a later process step is mixed with the second material, i.e., a liquid epoxy, imide and/or polybenzoxazole resin (not shown) and with the reactive diluent, is represented below by means of a reaction scheme:

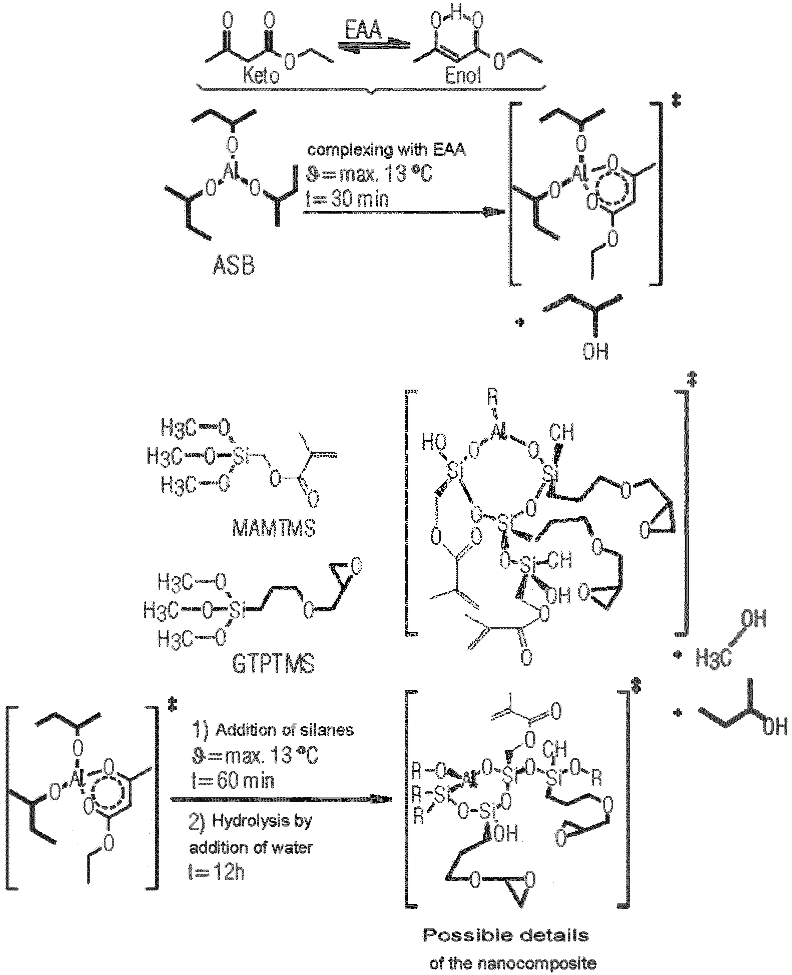

On the product side, the reaction scheme shows only details of the products obtained, which come about possibly but not automatically in that form. As the skilled person is aware, there are various possible products here, present sometimes in one linkage and sometimes in another, but where both [R₂Si-O-Si-] and [R₂Si-O-Al-O-] units are always detectable.

Particularly readily apparent in the reaction scheme is the formation of the solvents methanol and 2-butanol, with the solvent being scavenged by addition of a reactive diluent such as an acrylate, a ketone, a phenone and/or a phosphine oxide and being copolymerized into the shaped article.

For example, the following compounds may be used according to preferred embodiments in the second material as reactive diluents, individually or in any desired mixture: trimethylpropane triacrylate (TMPTA), urethane dimethylacrylate (UDMA), ethylene glycol dimethacrylate (EGDMA), 1,6-hexanediol diacrylate (HDODA), bisphenol A ethoxydiacrylate (BAEDA), polyethylene glycol dimethylacrylate (EDMA) and/or nonaethylene glycol dimethacrylate (NEGDMA) in any desired combinations and/or mixtures.

The addition of reactive diluent in the majority of cases is preferably 20 wt%, based on the theoretical weight of partially reacted silane used, i.e., "first material" without solvent. The amount of 20 wt% may be divided for example between the reactive diluents UDMA and EDMA at 10 wt% each.

The presence of at least one reactive diluent in the formulation enables not only a marked reduction in the shrinkage through crosslinking and hence better dimensional integrity, from about 10% to below 5%, but also the exertion of influence over the elastic and rheological properties of the crosslinked polymer obtainable by thermal curing. On solidification, therefore, the stress states, which still form to a small extent, can be accommodated and dispersed more effectively in the material, thermal shock states are able to proceed without the development of cracks, and, overall, relatively high filling levels with thermal conductivity-boosting particles can be brought about - higher filling levels with thermally conductive fillers leading overall to higher thermal conductivities of a shaped article produced therefrom. Since a number of reactive diluents with different chain lengths are suitable for use in the system of materials described, viscosity and elasticity may be adjusted not only via the amount of the reactive diluent but also via the type used, as well. The use of mixtures of the reactive diluents is likewise possible.

According to one advantageous embodiment, therefore, long-chain representatives of the reactive diluents in particular are used preferably and/or predominantly in the mixtures, it having been found that the long-chain reactive diluents, such as acrylates, for example, improve the elastic properties of the overall material without reducing the strength.

"Long-chain" refers here to an acrylate having an unbranched carbon chain of at least 5 carbon atoms, preferably of at least 8 carbon atoms and very preferably of at least 12 carbon atoms.

These "first materials", which can be filled with particles, especially thermally conductive particles, can be storage-stably mixed with the "second material", i.e., with all synthetic resins such as epoxides, imides and/or PBOs - polybenzoxazoles on the one hand and with the reactive diluent on the other hand, and so it is only on suitable addition of curing agent and/or initiator and corresponding increase in temperature that they undergo irreversible reaction to form the shaped article.

Suitability as "second material", which is a resin which can be thermally cured to a shaped article, is possessed by all common synthetic resins, preferably those which are thermally stable and which are present in the formulation - under standard conditions - in liquid and/or liquefiable form, in particular also with a tacky surface - hence the use as adhesive. The second material comprises this resin or this resin mixture and the reactive diluent. Prior to processing, this material is usually admixed with a curing component. The formulation then cures with increase in temperature and usually in a short time to form a very firm, infusible plastic, such as to form a three-dimensionally crosslinked thermoset, for example.

"Standard conditions" are also familiar in technical circles as "standard temperature and pressure", "STP" for short.

"Viscidity" here refers to a wide range of viscosity within which the formulation with filler is workable. Fluidity is also sufficient in many cases. Depending on the utility, the formulation may be of low viscidity or high viscidity, according, for example, to the capillaries into which the formulation is to be introduced.

In principle, the fluidities of the reaction partners are to be tailored to one another. For example, the high viscidity of the first material can be compensated by low viscidity in the second material.

In the formulation, the ratio of the partially reacted silane compound, i.e., the first material, to the "second material", the liquid resin and the reactive diluent, is - in percent by weight - from 1 wt%:99 wt% to 99 wt%: 1 wt%.

Across the many different applications, the proportions of first to second material here may also differ. According to one preferred embodiment, the first component is predominant.

Examples of preferred proportions are in the range from 60 wt% to 85 wt% of first material to 15 wt% to 40 wt% of second material, another example being a ratio of 50 wt% to 50 wt%. There is preferably at least 10 wt% of "second material" in the unfilled formulation.

For the production of shaped articles, especially thermally conductive shaped particles, from a composition of materials according to the invention, the liquid mixture is additionally admixed, for example, with filler, more particularly thermally conductive metallic and/or ceramic filler. Metallic filler added is, for example, copper and/or aluminum. Candidates for ceramic fillers include all kinds of metal oxides, metal nitrides, such as AlN, aluminum nitride, Al₂O₃, aluminum trioxide - "α-alumina" - magnesium oxide, zinc oxide and/or tin oxide, present in various modifications such as perovskite, titanate, etc., doped or undoped.

Fillers used, including in particular as thermally conductive fillers, are metallic and/or ceramic, coated and/or uncoated particles, for example. The particles may be present as mixtures of two or more fractions, which may differ in their material, in shape, in size, etc. Fillers may endow the material with various properties, such as thermal conductivity, electrical conductivity, color, metallic luster, etc.

Fillers and/or other additives may be present in the hybrid composition of materials according to the invention in an amount of 0 to 85 wt%, more particularly of 0 to 80 wt% and preferably of 0 to 70%. Filling levels in the range from 70 to 90 wt% are readily realizable with the presently described formulations, especially if what are called "multimodal" filler mixtures are used, of the kind already employed in casting resins. In this case, relatively small filler particles are mixed with larger filler particles, and so the smaller filler particles often serve as ball bearings for the larger filler particles and a high filling level with large filler particles does not stand in the way of a fluid and good workability of the resin and/or adhesive formulation thus filled.

"Multimodal" here denotes the presence not only of one filler fraction, which is unitary in terms of shape, density, material and particle size to a greater or lesser extent, but rather of various fractions, which differ in terms of their material, their shape, their density and, in particular, also in terms of their size. In this case, smaller fillers are then able to fill the gaps left by larger filler particles, and also act as ball bearings with regard to the fluidity of the filler particles, and so endow highly filled formulations with a fluidity which is sufficient for workability.

It is important here that in the fully cured thermoset there is as little uncrosslinked material as possible, i.e., as little material as possible that does not form part of the three-dimensional network. One reason for this is because it evaporates and then leaves cavities in the shaped article that result in a weakening of the mechanical strength, and another is because the physical and chemical properties of the shaped article at that point may not be the same as those in the three-dimensional network and therefore detract from the usability of the shaped article as a whole, whether for heat removal, as a cooling element, for encapsulation and/or as an adhesive.

Depending on the composition of the formulation, there are shrinkages and/or stress states, because during solidification the solvent present in the original liquid is at least partly enclosed and departs the solid again slowly by processes of diffusion. Under unfavorable conditions, any capillary pressure occurring may even lead to the development of cracks and/or flaking and is therefore disadvantageous for a workpiece produced in this way, such as a cooling structure, for example. With the present material, a simple reduction and/or adaptation in the solvent fraction, as is possible with paints and inks, for example, is not an option.

Accordingly, in the synthesis of the material, no organic solvent is added anyway - it forms as an elimination product during the reaction of the monomers to an increasing extent as the stage of reaction progresses. As well as the organic solvents, such as methanol, ethanol, propanol and butanol, for example, the material contains a small amount of water, which is added to initiate the reaction and is not completely consumed. Both components, namely both organic solvent and water, are causes of the described shrinkage and/or cracking phenomena during the through-curing of the material.

With a formulation according to the present invention it is possible to produce shaped articles having the following physical properties:
Thermal conductivity in [W/mK] in the range from 10 to 40;
Lap shear strength in [N/mm²] in the range from 10 to 30;
Viscosity in [pascals] in the range from 150 to 800;
Working temperature in [°C] 200;
Pot life in [hours] in the range from 2 to 24;
Storage stability in [months] 4;
Volume resistance in [Ω*mm] in the range from 1 × 10¹⁵ to electrically conducting;
Dielectric strength in [kV/mm] in the range from greater than 20 to likewise electrically conducting.

Provided here for the first time is a formulation which unites high filling levels with long pot life and good thermal conductivity, thereby enabling access, for casting, extrusion and/or injection molding, to a formulation having very high filling levels and at the same time good workability.

## Claims

1. A formulation for a resin and/or an adhesive, comprising at least one first material composed of at least one organofunctional silane component with a ceramic-forming alkoxidic component, and at least one second, liquid-form material, resin curable thermally to a shaped article, and reactive diluents.

2. The formulation of claim 1, wherein in the first material the organofunctional silane-based component predominates over the ceramic-forming alkoxidic component.

3. The formulation of either of claims 1 and 2, wherein the ceramic-forming second component in the first material comprises an oxide of a silicon, titanium, aluminum, boron and/or zirconium.

4. The formulation of any of the preceding claims, wherein the molar weight of the organofunctional silane compound is in the range from 100 g/mol to 400 g/mol.

5. The formulation of any of the preceding claims, wherein at least one reactive diluent is selected from the group of compounds as follows: acrylates, ketones, phenones and/or phosphine oxides.

6. The formulation of any of the preceding claims, wherein at least one reactive diluent is in the form of a long-chain acrylate which is present with a scaffold of unbranched-form carbon atoms with a chain length of not less than 5.

7. The formulation of any of the preceding claims, which comprises at least one organofunctional silane which is bifunctional.

8. The formulation of any of the preceding claims, wherein the liquid-form resin and/or the reactive diluent and the first material are present in a ratio - in percent by weight - of 1 wt%:99 wt% to 50 wt%:50 wt%.

9. The formulation of any of the preceding claims, wherein the second, liquid-form material comprises an epoxy resin, an imide resin and/or a polybenzoxazole resin alone or in any desired combinations and/or mixtures.

10. The formulation of any of the preceding claims, which comprises as reactive diluent an acrylate selected from the group of acrylates as follows: trimethylpropane triacrylate (TMPTA), urethane dimethylacrylate (UDMA), ethylene glycol dimethacrylate (EGDMA), 1,6-hexanediol diacrylate (HDODA), bisphenol A ethoxydiacrylate (BAEDA), polyethylene glycol dimethylacrylate (EDMA) and/or nonaethylene glycol dimethacrylate (NEGDMA), all aforesaid acrylate compounds being present in any desired combinations and/or mixtures.

11. The formulation of any of the preceding claims, which comprises fillers.

12. The formulation of claim 11, wherein the fillers are present in different fractions, more particularly multimodally.

13. The formulation of any of the preceding claims, which comprises thermally conductive fillers.

14. A shaped article obtainable by thermally curing a formulation of any of claims 1 to 13.

15. The use of a formulation of any of claims 1 to 13 as a thermally conductive resin and/or adhesive for heat dissipation in an electrical or electronic component.

## Patentansprüche

1. Formulierung für ein Harz und/oder einen Klebstoff, die mindestens ein erstes Material, das aus mindestens einer organofunktionellen Silankomponente mit einer keramikbildenden alkoxidischen Komponente zusammengesetzt ist, und mindestens ein zweites, flüssiges Material, thermisch zu einem Formteil härtbares Harz und Reaktivverdünner umfasst.

2. Formulierung nach Anspruch 1, wobei bei dem ersten Material die organofunktionelle Komponente auf Silanbasis gegenüber der keramikbildenden alkoxidischen Komponente überwiegt.

3. Formulierung nach einem der Ansprüche 1 und 2, wobei die zweite, keramikbildende Komponente in dem ersten Material ein Oxid von Silizium, Titan, Aluminium, Bor und/oder Zirconium umfasst.

4. Formulierung nach einem der vorhergehenden Ansprüche, wobei die molare Masse der organofunktionellen Silanverbindung im Bereich von 100 g/mol bis 400 g/mol liegt.

5. Formulierung nach einem der vorhergehenden Ansprüche, wobei mindestens ein Reaktivverdünner aus folgender Gruppe von Verbindungen ausgewählt ist: Acrylate, Ketone, Phenone und/oder Phosphinoxide.

6. Formulierung nach einem der vorhergehenden Ansprüche, wobei mindestens ein Reaktivverdünner in Form eines langkettigen Acrylats mit einem Gerüst aus unverzweigten Kohlenstoffatomen mit einer Kettenlänge von mindestens 5 vorliegt.

7. Formulierung nach einem der vorhergehenden Ansprüche, die mindestens ein organofunktionelles Silan umfasst, das bifunktionell ist.

8. Formulierung nach einem der vorhergehenden Ansprüche, wobei das flüssige Harz und/oder der Reaktivverdünner und das erste Material in einem Verhältnis - in Gewichtsprozent - von 1 Gew.-% : 99 Gew.-% bis 50 Gew.-% : 50 Gew.-% vorliegen.

9. Formulierung nach einem der vorhergehenden Ansprüche, wobei das zweite, flüssige Material ein Epoxidharz, ein Imidharz und/oder ein Polybenzoxazolharz allein oder in beliebigen gewünschten Kombinationen und/oder Gemischen umfasst.

10. Formulierung nach einem der vorhergehenden Ansprüche, die als Reaktivverdünner ein Acrylat umfasst, das aus folgender Gruppe von Acrylaten ausgewählt ist: Trimethylpropantriacrylat (TMPTA), Urethandimethylacrylat (UDMA), Ethylenglycoldimethacrylat (EGDMA), 1,6-Hexandioldiacrylat (HDODA), Bisphenol-A-Ethoxydiacrylat (BAEDA), Polyethylenglycoldimethylacrylat (EDMA) und/oder Nonaethylenglycoldimethacrylat (NEGDMA), wobei alle genannten Acrylatverbindungen in beliebigen gewünschten Kombinationen und/oder Gemischen vorliegen.

11. Formulierung nach einem der vorhergehenden Ansprüche, die Füllstoffe umfasst.

12. Formulierung nach Anspruch 11, wobei die Füllstoffe in unterschiedlichen Fraktionen, insbesondere multimodal, vorliegen.

13. Formulierung nach einem der vorhergehenden Ansprüche, die thermisch leitfähige Füllstoffe umfasst.

14. Formteil, das sich durch thermisches Härten einer Formulierung nach einem der Ansprüche 1 bis 13 erhalten lässt.

15. Verwendung einer Formulierung nach einem der Ansprüche 1 bis 13 als thermisch leitfähiges Harz und/oder thermisch leitfähiger Klebstoff für die Wärmeableitung bei elektrischen oder elektronischen Bauteilen.

## Revendications

1. Formulation pour une résine et/ou un adhésif, comprenant au moins un premier matériau, composé d'au moins un constituant silane organofonctionnel comportant un constituant alcoxyde formant une céramique, et au moins un deuxième matériau sous forme liquide, une résine thermiquement durcissable en un article façonné et des diluant réactifs.

2. Formulation selon la revendication 1, dans laquelle, dans le premier matériau, le constituant à base de silane organofonctionnel est prédominant par rapport au constituant alcoxyde formant une céramique.

3. Formulation selon l'une des revendications 1 et 2, dans laquelle le deuxième constituant formant une céramique dans le premier matériau comprend un oxyde de silicium, de titane, d'aluminium, de bore et/ou de zirconium.

4. Formulation selon l'une des revendications précédentes, dans laquelle la masse molaire du composé de silane organofonctionnel est située dans la plage de 100 g/mole à 400 g/mole.

5. Formulation selon l'une quelconque des revendications précédentes, dans laquelle au moins un diluant réactif est choisi dans le groupe de composés comme suit : acrylates, cétones, phénones et/ou oxydes de phosphine.

6. Formulation selon l'une quelconque des revendications précédentes, dans laquelle au moins un diluant réactif est sous la forme d'un acrylate à longue chaîne qui est présent avec une structure d'atomes de carbone sous forme non ramifiés d'une longueur de chaîne supérieure ou égale à 5.

7. Formulation selon l'une quelconque des revendications précédentes, laquelle comprend au moins un silane organofonctionnel qui est bifonctionnel.

8. Formulation selon l'une quelconque des revendications précédentes, dans laquelle la résine sous forme liquide et/ou le diluant réactif et le premier matériau sont présents dans un rapport - en pourcentage en poids - de 1% en poids:99% en poids à 50% en poids:50% en poids.

9. Formulation selon l'une quelconque des revendications précédentes, dans laquelle le deuxième matériau sous forme liquide comprend une résine époxy, une résine imide et/ou une résine polybenzoxazole, seules ou dans de quelconques combinaisons et/ou mélanges souhaités.

10. Formulation selon l'une quelconque des revendications précédentes, qui comprend, comme diluant réactif, un acrylate choisi dans le groupe d'acrylates comme suit : triacrylate de triméthylpropane, (TMPTA), diméthylacrylate d'uréthane (UDMA), diméthacrylate d'éthylèneglycol (EGDMA), diacrylate de 1,6-hexanediol (HDODA), éthoxydiacrylate de bisphénol A (BAEDA), diméthylacrylate de polyéthylèneglycol (EDMA) et/ou diméthacrylate de nonaéthylèneglycol (NEGDMA), tous les composés acrylate susmentionnés étant présents dans de quelconques combinaisons et/ou mélanges souhaités.

11. Formulation selon l'une quelconque des revendications précédentes, qui comprend des charges.

12. Formulation selon la revendication 11, dans laquelle les charges sont présentes en différentes fractions, plus particulièrement de manière multimodale.

13. Formulation selon l'une quelconque des revendications précédentes, qui comprend des charges thermoconductrices.

14. Article façonné pouvant être obtenu par durcissement thermique d'une formulation selon l'une quelconque des revendications 1 à 13.

15. Utilisation d'une formulation selon l'une quelconque des revendications 1 à 13 en tant que résine thermoconductrice et/ou adhésif thermoconducteur pour la dissipation de chaleur dans un composant électrique ou électronique.
